# EUROPEAN PATENT SPECIFICATION

(11) **EP 2 372 274 B1**
(45) Date of publication and mention of the grant of the patent: **11.05.2016**
(21) Application number: 11250313.1
(22) Date of filing: 16.03.2011
(51) Int. Cl.: F25D 3/10, F25D 29/00, F25D 21/10, F25D 21/04

(54) **Freezer with liquid cryogen refrigerant and method**
Gefrierschrank mit flüssigem Kryogenkühlmittel und Verfahren
Congélateur doté d'un réfrigérant cryogénique liquide et procédé

(30) Priority: 18.03.2010 US 726910
(43) Date of publication of application: 05.10.2011
(73) Proprietor: Chart Inc., Garfield Heights OH 44125 (US)
(72) Inventor: Brooks, Jeffrey, Ohio 44125 (US)
(74) Representative: Stafford, Jonathan Alan Lewis

(56) References cited:
- WO-A1-97/18422
- CA-A- 840 082
- GB-A- 2 165 930
- US-A- 3 714 793
- US-A- 3 782 133

## Description

The present invention generally relates to freezers and, more particularly, to freezers that use liquid cryogen as a refrigerant.

Freezers for storing biological specimens, samples, materials, products and the like often use cryogenic liquids as a refrigerant. Such freezers typically feature a reservoir of a liquid cryogen, such as liquid nitrogen, in the bottom of the freezer storage chamber with the product stored above the reservoir or partly submerged with in the cryogenic liquid. The freezers typically also feature a double-walled, vacuum insulated construction so that the storage chamber is well insulated. Such freezers provide storage temperatures ranging from approximately -90°C to -195°C.

A disadvantage of prior art liquid cryogen freezers is that the temperature cannot be directly controlled. The temperature is controlled by maintaining the amount of cryogenic liquid in the reservoir. The temperature of the freezer storage compartment thus varies dependent upon the amount of liquid cryogen in the freezer.

A further disadvantage of prior art liquid cryogen freezers is that there is some concern that submerging biological specimens in the cryogenic liquid presents a risk of cross-contamination between specimen containers. Even when the stored specimen containers are placed in the cold vapor above the cryogenic liquid reservoir, there is still the potential for the specimen containers to come into contact with, or be submerged within, the cryogenic liquid if the freezer is ovefilled with the cryogenic liquid.

Also available are freezers that use mechanical refrigeration systems in place of a liquid cryogen reservoir. The mechanical refrigeration systems typically include a compressor, an evaporator, a condenser and a fan. Air is circulated through the storage chamber and across a cooling coil to maintain the desired temperature in the freezer storage chamber. The freezers normally do not feature vacuum insulation and employ materials such as foam and/or fiberglass insulation to insulate the storage chamber. Such freezers typically provide storage temperatures in the -40°C to -80°C range.

A disadvantage of the mechanical freezer is that the mechanical refrigeration system requires a significant amount of electrical power to maintain the desired temperature within the freezer storage chamber. Furthermore, mechanical refrigeration systems remove heat from the storage chamber and reject it to the environment around the freezer. This adds significant heat to the room within which the freezer is stored so that additional air conditioning capacity is required for the room. This adds additional electrical power requirements to the facility. In addition, in the event of a power failure, the storage chamber will warm rapidly, which could result in the loss of the stored biological materials.
GB2165930A describes a refrigerant system for use in cooling the interior of an insulated chamber wherein the liquid refrigerant may be CO₂.

A first aspect of the present invention provides a freezer for using liquid cryogen as a refrigerant comprising:
a) an inner vessel defining a storage chamber;
b) an outer jacket generally surrounding the inner vessel so that an insulation space is defined there between;
c) a heat exchanger positioned in the storage chamber, said heat exchanger having an outlet and an inlet adapted to communicate with a supply of the liquid cryogen refrigerant so that the liquid cryogen refrigerant may flow through the heat exchanger to cool the storage chamber while being vaporized;
d) a purge line in communication with the outlet of the heat exchanger, said purge line including a purge outlet positioned adjacent to an exterior of the heat exchanger; and
e) a purge valve positioned within the purge line so that the vaporized liquid cryogen from the heat exchanger may be selectively directed to the exterior of the heat exchanger to reduce ice formation on the heat exchanger.

The heat exchanger may be positioned within a top portion of the storage chamber. The the purge outlet is preferably positioned over the heat exchanger. The heat exchanger may be a cooling coil. The liquid cryogen refrigerant is preferably liquid nitrogen. The insulation space may be a vacuum insulation space. The freezer of the first aspect preferably further comprises an access opening formed through the inner vessel and the outer jacket and a lid for removably closing the access opening. The freezer may further comprise a rotating tray positioned within the storage chamber.

In a first preferred embodiment of the freezer of the first aspect of the present invention the freezer further comprises:
f) an exit line in communication with the outlet of the heat exchanger and the purge line;
g) an exhaust line having an exhaust vent;
h) an exhaust valve positioned within the exhaust line;
i) a feed line in communication with the inlet of the heat exchanger and adapted to communicate with the supply of liquid cryogen;
j) a bypass line in communication with the feed line;
k) a bypass valve positioned in the bypass line;
l) a feed temperature sensor in communication with the feed line;
m) a purge gas temperature sensor in communication with the purge line;
n) an exhaust gas temperature sensor in communication with the exit line;
o) a chamber temperature sensor in communication with the storage chamber;
p) a controller in communication with the feed, purge gas, exhaust gas and chamber temperature sensors and the bypass, purge and exhaust valves, said controller programmed to:
   i. open the bypass valve when a temperature of gas flowing through the feed line is higher than a temperature of the storage chamber;
   ii. close the bypass valve when the temperature of gas flowing through the feed line is lower than the temperature of the storage chamber;
   iii. open the purge valve and close the exhaust valve when a temperature of gas flowing through the purge line is greater than a minimum desired temperature of the storage chamber;
   iv. close the purge valve and open the exhaust valve when the temperature of gas flowing through the purge line is lower than the minimum desired temperature of the storage chamber;
   v. close the exhaust valve when a temperature of gas flowing through the exit line is lower than the minimum desired temperature of the storage chamber by a predetermined amount; and
   vi. close all valves when a temperature of the storage chamber is less than the minimum desired temperature.

In the first preferred embodiment, the predetermined amount of p)v. is approximately 10°C to 20°C.

In a second preferred embodiment of the freezer of the first aspect of the present invention the freezer further comprises:
f) an exit line in communication with the outlet of the heat exchanger and the purge line;
g) an exhaust line having an exhaust vent;
h) an exhaust valve positioned within the exhaust line.

In the second preferred embodiment, the freezer may further comprise:
i) a purge gas temperature sensor in communication with the purge line;
j) an exhaust gas temperature sensor in communication with the exit line;
k) a chamber temperature sensor in communication with the storage chamber;
l) a controller in communication with the purge gas, exhaust gas and chamber temperature sensors and the purge and exhaust valves, said controller programmed to:
   i. open the purge valve and close the exhaust valve when a temperature of gas flowing through the purge line is greater than a minimum desired temperature of the storage chamber;
   ii. close the purge valve and open the exhaust valve when the temperature of gas flowing through the purge line is lower than the minimum desired temperature of the storage chamber;
   iii. close the exhaust valve when a temperature of gas flowing through the exit line is lower than the minimum desired temperature of the storage chamber by a predetermined amount; and
   iv. close all valves when a temperature of the storage chamber is less than the minimum desired temperature.

In the second embodiment the predetermined amount of l)iii. is preferably approximately 10°C to 20°C.

In a third preferred embodiment of the freezer of the first aspect of the present invention the freezer further comprises:
f) a feed line in communication with the inlet of the heat exchanger and adapted to communicate with the supply of liquid cryogen;
g) a bypass line in communication with the feed line;
h) a bypass valve positioned in the bypass line.

The freezer of the third embodiment may further comprise:
i) a feed temperature sensor in communication with the feed line;
j) a controller in communication with the feed temperature sensor and the bypass valve, said controller programmed to open the bypass valve when a temperature of gas flowing through the feed line is higher than a temperature of the storage chamber and close the bypass valve when the temperature of gas flowing through the feed line is lower than the temperature of the storage chamber.

A second aspect of the present invention provides a freezer comprising:
a) an inner vessel defining a storage chamber;
b) an outer jacket generally surrounding the inner vessel so that an insulation space is defined there between;
c) a supply of liquid cryogen refrigerant;
d) a heat exchanger positioned in the storage chamber, said heat exchanger having an outlet and an inlet in communication with the supply of the liquid cryogen refrigerant so that the liquid cryogen refrigerant selectively flows through the heat exchanger to cool the storage chamber while being vaporized;
e) a purge line in communication with the outlet of the heat exchanger, said purge line including a purge outlet positioned adjacent to an exterior of the heat exchanger; and
f) a purge valve positioned within the purge line so that the vaporized liquid cryogen from the heat exchanger is selectively directed to the exterior of the heat exchanger to reduce ice formation on the heat exchanger.

In the second aspect the heat exchanger may be positioned within a top portion of the storage chamber. The purge outlet may be positioned over the heat exchanger. The heat exchanger is preferably a cooling coil. The liquid cryogen refrigerant may be liquid nitrogen. The insulation space may be a vacuum insulation space. The freezer according to the second aspect may further comprise an access opening formed through the inner vessel and the outer jacket and a lid for removably closing the access opening. The freezer may yet further comprise a rotating tray positioned within the storage chamber.

In a first preferred embodiment of the second aspect of the present invention the freezer further comprises:
g) an exit line in communication with the outlet of the heat exchanger and the purge line;
h) an exhaust line having an exhaust vent;
i) an exhaust valve positioned within the exhaust line;
j) a feed line in communication with the inlet of the heat exchanger and the supply of liquid cryogen;
k) a bypass line in communication with the feed line;
l) a bypass valve positioned in the bypass line;
m) a feed temperature sensor in communication with the feed line;
n) a purge gas temperature sensor in communication with the purge line;
o) an exhaust gas temperature sensor in communication with the exit line;
p) a chamber temperature sensor in communication with the storage chamber;
q) a controller in communication with the feed, purge gas, exhaust gas and chamber temperature sensors and the bypass, purge and exhaust valves, said controller programmed to:
   i. open the bypass valve when a temperature of gas flowing through the feed line is higher than a temperature of the storage chamber;
   ii. close the bypass valve when the temperature of gas flowing through the feed line is lower than the temperature of the storage
   iii. open the purge valve and close the exhaust valve when a temperature of gas flowing through the purge line is greater than a minimum desired temperature of the storage chamber;
   iv. close the purge valve and open the exhaust valve when the temperature of gas flowing through the purge line is lower than the minimum desired temperature of the storage chamber;
   v. close the exhaust valve when a temperature of gas flowing through the exit line is lower than the minimum desired temperature of the storage chamber by a predetermined amount; and
   vi. close all valves when a temperature of the storage chamber is less than the minimum desired temperature.

In the first preferred embodiment of the second aspect the predetermined amount of q)v. is approximately 10°C to 20°C.

In a second preferred embodiment of the second aspect the freezer further comprises:
g) an exit line in communication with the outlet of the heat exchanger and the purge line;
h) an exhaust line having an exhaust vent;
i) an exhaust valve positioned within the exhaust line.

In the second embodiment of the second aspect the freezer further comprises:
j) a purge gas temperature sensor in communication with the purge line;
k) an exhaust gas temperature sensor in communication with the exit line;
l) a chamber temperature sensor in communication with the storage chamber;
m) a controller in communication with the purge gas, exhaust gas and chamber temperature sensors and the purge and exhaust valves, said controller programmed to:
   i. open the purge valve and close the exhaust valve when a temperature of gas flowing through the purge line is greater than a minimum desired temperature of the storage chamber;
   ii. close the purge valve and open the exhaust valve when the temperature of gas flowing through the purge line is lower than the minimum desired temperature of the storage chamber;
   iii. close the exhaust valve when a temperature of gas flowing through the exit line is lower than the minimum desired temperature of the storage chamber by a predetermined amount; and
   iv. close all valves when a temperature of the storage chamber is less than the minimum desired temperature.

In the second embodiment of the second aspect the predetermined amount of m)iii. is approximately 10°C to 20°C.

In a third preferred embodiment of the second aspect the freezer further comprises:
g) a feed line in communication with the inlet of the heat exchanger and the supply of liquid cryogen;
h) a bypass line in communication with the feed line;
i) a bypass valve positioned in the bypass line.

In the third embodiment of the second aspect the freezer further comprises:
j) a feed temperature sensor in communication with the feed line;
k) a controller in communication with the feed temperature sensor and the bypass valve, said controller programmed to open the bypass valve when a temperature of gas flowing through the feed line is higher than a temperature of the storage chamber and close the bypass valve when the temperature of gas flowing through the feed line is lower than the temperature of the storage chamber.

With regard to the second aspect of the present invention the supply of liquid cryogen refrigerant preferably includes a pressurized container containing the liquid cryogen refrigerant.

In the second aspect it is preferred that the supply of liquid cryogen refrigerant includes a container containing the liquid cryogen and a pump in circuit between the container and the heat exchanger inlet.

A third aspect of the present invention provides a method for cooling a storage chamber of a freezer with a liquid cryogen refrigerant comprising the steps of:
a) providing a heat exchanger in a top portion of the storage chamber;
b) feeding the liquid cryogen refrigerant to the heat exchanger;
c) vaporizing the liquid cryogen refrigerant in the heat exchanger using heat from the storage chamber so that the storage chamber is cooled and a cryogen refrigerant vapor is produced;
d) purging the cryogen refrigerant vapor from the heat exchanger;
e) directing the purged cryogen refrigerant vapor to an exterior of the heat exchanger to reduce ice formation on the heat exchanger.

The method preferably further comprises the steps of:
f) detecting a temperature of the cryogen refrigerant vapor;
g) exhausting the cryogen refrigerant vapor outside of the freezer if the temperature of the cryogen refrigerant vapor is less than a desired minimum temperature of the storage chamber.

Fig. 1 is a schematic of an embodiment of the freezer with liquid cryogen refrigerant of the present invention; and

Fig. 2 is a flow chart showing the processing performed by the controller of Fig. 1.

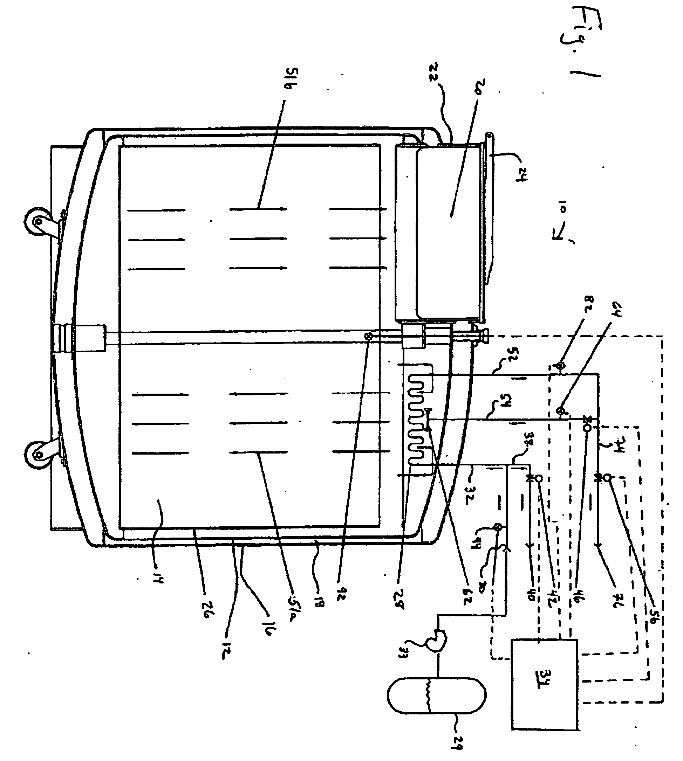

An embodiment of the freezer with liquid cryogen refrigerant of the invention is indicated in general at 10 in Fig. 1. The freezer includes an inner vessel 12 which defines storage chamber 14. An outer jacket 16 generally surrounds the vessel 12 so that an insulation space 18 is defined between the inner vessel 12 and the outer jacket 16. A vacuum is preferably drawn on the insulation space 18 so that the storage chamber 14 is insulated. In an alternative embodiment, the vacuum insulation space 18 may be supplemented, or replaced, by insulation materials known in the art including, but not limited to, foam or fiberglass.

An insulated plug or lid 20 is removably positioned within an offset access opening 22 of the freezer which permits access to the storage chamber 14. The lid 20 is preferably mounted to the remaining portion of the freezer by hinged bracket 24. A rotating tray 26 is positioned within the storage chamber 14 and holds the items being stored while also providing access through offset access opening 22 when the lid 20 is open.

The storage chamber 14 of the freezer, and thus the items stored therein, are cooled by a heat exchanger positioned within a top portion of the storage chamber. The heat exchanger preferably takes the form of a cooling coil 28, but alternative heat exchanger components or structures could be used instead.

A storage container 29 containing a supply of liquid cryogen refrigerant is in communication with the inlet 30 of feed line 32. Feed line 32 communicates with the inlet of cooling coil 28. While liquid nitrogen is discussed below as the liquid cryogen refrigerant, it should be understood that alternative cryogenic liquids could be substituted for the liquid nitrogen. The liquid nitrogen is pressurized for transfer to the inlet 30 of the feed line 32 such as by a pump 33. Alternatively, the liquid nitrogen could be stored under pressure in storage container 29 so that no pump is needed. Other alternatives for supplying cryogenic liquid under pressure are known in the art and may be used as well.

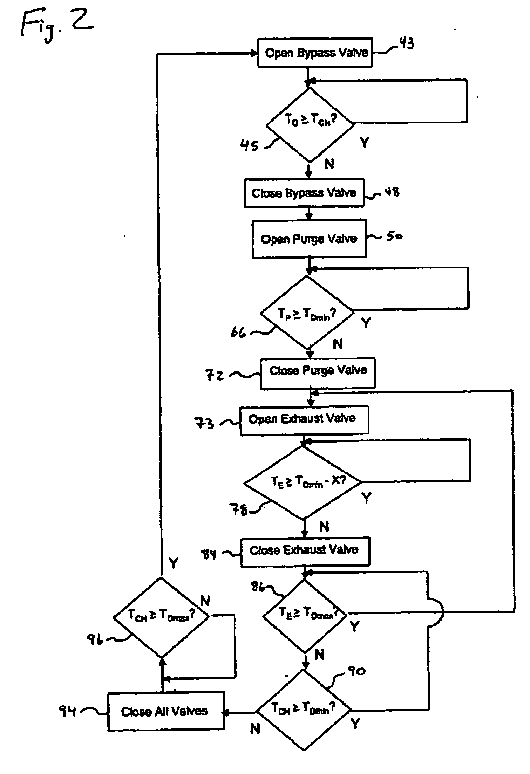

With regard to operation of the freezer of Fig. 1, all of the valves of the freezer initially are closed. When cooling of the storage chamber 14 is desired, the operator initiates the cooling cycle via electronic controller 34. Controller 34 may be a microprocessor or any other electronic control device known in the art. As illustrated by block 43 of Fig. 2, the controller 34 of Fig. 1 opens the automated bypass valve 42 so that liquid nitrogen flows through the inlet 30 of feed line 32.

There will initially be gas in the transfer line connecting the inlet 30 of the feed line with the source of pressurized liquid nitrogen. This gas normally will be warmer than the storage chamber of the freezer. To prevent this gas from entering the heat exchanger, a bypass line 38 having an outlet 40 also communicates with a portion of the feed line 32 positioned between the inlet of the cooling coil 28 and the inlet 30 of the feed line. When the controller opens bypass valve 42, the warm gas that enters through inlet 30 is vented through the bypass line 38 and outlet 40.

The temperature of the gas entering the feed line 32 is monitored by feed temperature sensor 44, which also communicates with controller 34. When the temperature of the incoming gas (indicated as T_{G} in decision block 45 of Fig. 2) has cooled to a temperature below that of the freezer storage chamber 14 (indicated as T_{CH} in decision block 45 of Fig. 2), the controller closes bypass valve 42 and a purge gas valve 46 is opened, as indicated at 48 and 50, respectively, in Fig. 2.

As a result, liquid nitrogen refrigerant flows through the cooling coil 28. The liquid nitrogen flowing through the cooling coil is colder than the gas inside of storage chamber 14 so that it absorbs heat from inside of the chamber. As the liquid nitrogen absorbs the heat, it is vaporized and exits the heat exchanger taking the absorbed heat with it.

As illustrated by arrows 51a and 51b in Fig. 1, the resulting cold gas surrounding the heat exchanger inside the storage chamber circulates throughout the chamber via natural convection. More specifically, the higher density cold gas from the top portion of the chamber within which the cooling coil is positioned descends (arrows 51a) thus forcing warmer lower density gas to rise (arrows 51 b) to be cooled by the cooling coil.

As illustrated in Fig. 1, the open purge gas valve 46 is positioned on the outlet side of the heat exchanger. The vaporized nitrogen refrigerant exits the outlet of the heat exchanger through exit line 52 and travels into purge line 54, since exhaust valve 56 is in a closed condition. Purge line 54 is provided with purge outlets 62 positioned adjacent to and over the cooling coil so that the nitrogen gas exits the purge line as a purge gas and provides additional cooling to the storage chamber 14.

In addition, ice formation on the exterior surface of the cooling coil 28 can insulate it from the storage chamber of the freezer and reduce the coil's cooling effectiveness. The nitrogen purge gas exiting the purge outlets 62 above the cooling coil 28 is a dry gas. This dry nitrogen purge gas displaces ambient air (which could contain water) from the space around the exterior surface of the cooling coil to reduce the possibility of ice forming on the coil. Furthermore, when the process of Fig. 2 is performed, the purge typically continues until a sufficient amount of dry nitrogen purge gas is introduced to the chamber to displace any moist air in the chamber.

To prevent purge gas that is substantially colder than the desired storage chamber temperature of the freezer from discharging into the chamber 14, the controller 34 monitors the temperature of the purge gas via a purge gas temperature sensor 64. When the temperature of the purge gas (indicated as T_{P} in decision block 66 of Fig. 2) traveling through purge line 54 is cooled to the minimum desired temperature of the storage chamber of the freezer (indicated as T_{Dmin} in decision block 66 of Fig. 2), the purge gas valve 46 is closed by the controller 34, as indicated at 72 in Fig. 2.

When the purge gas valve 46 is closed, the cooling gas exhaust valve 56 is opened by the controller 34, as indicated at 73 in Fig. 2, to vent nitrogen gas from the cooling coil external to the freezer via the exhaust line 74 and exhaust vent 76. As long as the cooling coil 28 is at a temperature less than that of the gas inside of the storage chamber 14, convection cooling will occur.

The controller 34 monitors the exhaust gas temperature via an exhaust gas temperature sensor 82. When the temperature of the nitrogen exhaust gas flowing through exit line 52 and exhaust line 74 (indicated as T_{E} in decision block 78 of Fig. 2) cools to a temperature approximately 10°C to 20°C below the minimum desired storage chamber temperature of the storage chamber (indicated as T_{Dmin} - X in decision block 78 of Fig. 2), the exhaust valve 56 is closed by the controller, as indicated at 84 in Fig. 2, so that the flow of liquid nitrogen into the cooling coil is paused. The nitrogen (liquid or gaseous) in the cooling coil then absorbs heat from the chamber and expands or evaporates so that no-flow cooling is accomplished. While the predetermined amount X above and in decision block 78 of Fig. 2 is preferably approximately 10°C to 20°C, alternative temperature amounts may be used instead.

The exhaust gas temperature sensor 82 is positioned external to the freezer. As a result, it is warmed by ambient external air while there is no flow through the cooling coil 28. Once the exhaust gas temperature sensor detects that the gas within line 52 has warmed above the maximum desired storage chamber temperature (indicated as T_{Dmax} in decision block 86 of Fig. 2), the exhaust valve 56 is again opened by the controller.

As indicated by decision block 90 of Fig. 2, the exhaust valve 56 is cycled in accordance with the above until the freezer storage chamber 14 cools to the minimum desired temperature as measured by a chamber temperature sensor 92. At that time, as indicated at decision block 94, all valves are closed and the controller simply monitors the storage chamber temperature.

As indicated by decision block 96, when the storage chamber temperature of the storage chamber again warms to the maximum desired temperature, as measured by the chamber temperature sensor 92, the bypass valve 42 is again opened by the controller and the process of Fig. 2 begins again.

The freezer of Figs. 1 and 2 therefore removes heat from the storage chamber by vaporizing the liquid nitrogen in the cooling coil and then venting the gas outside of the freezer, and outside of the room within which the freezer is located, if desired. The gas created by vaporizing the liquid nitrogen can only be warmed to the temperature of the freezer storage chamber instead of above ambient as is the case with the refrigerant of a typical prior art mechanical freezer. As a result, no heat is added to the room within which the freezer is located to increase the air conditioning required for the room.

The freezer of Figs. 1 and 2 also allows for control of the freezer temperature, not possible with typical prior art liquid cryogen freezers, without the disadvantages of a mechanical freezer. In addition, the freezer of Figs. 1 and 2 prevents the stored product from making contact with and/or being submerged within the liquid cryogen by removing the liquid cryogen from the storage chamber of the freezer.

The freezer of Figs. 1 and 2 also eliminates the mechanical refrigeration components used by typical prior art mechanical freezers and thus the associated large electrical power requirements. Minimal power is required by the freezer of Figs. 1 and 2 to operate the controller that monitors and controls the freezer and the associated solenoid valves required for operation.

Furthermore, in the event of a power failure, the freezer of Figs. 1 and 2 is not immediately effected. Since the freezer incorporates a vacuum-insulated storage chamber, the storage chamber temperature is maintained over a longer period of time, thus requiring infrequent cooling cycles as opposed to the continuous cooling required by typical prior art mechanical freezers. This provides sufficient time to address power failure issues before the storage temperature inside the freezer is effected.

While the preferred embodiments of the invention have been shown and described, it will be apparent to those skilled in the art that changes and modifications may be made therein without departing from the scope of the invention which is defined by the appended claims.

## Claims

1. A freezer (10) for using liquid cryogen as a refrigerant comprising:
a) an inner vessel (12) defining a storage chamber (14);
b) an outer jacket (16) generally surrounding the inner vessel (12) so that an insulation space (18) is defined there between;
c) a heat exchanger (28) positioned in the storage chamber (14), said heat exchanger having an outlet (52) and an inlet (32) adapted to communicate with a supply of the liquid cryogen refrigerant so that the liquid cryogen refrigerant may flow through the heat exchanger to cool the storage chamber (14) while being vaporized;
d) a purge line (54) in communication with the outlet (52) of the heat exchanger, said purge line (54) including a purge outlet (62) positioned adjacent to an exterior of the heat exchanger; and
e) a purge valve (46) positioned within the purge line (54) so that the vaporized liquid cryogen from the heat exchanger may be selectively directed to the exterior of the heat exchanger to reduce ice formation on the heat exchanger.

2. The freezer (10) of claim 1 wherein the heat exchanger (28) is positioned within a top portion of the storage chamber (14).

3. The freezer (10) of claim 1 or 2 wherein the purge outlet (62) is positioned over the heat exchanger (28).

4. The freezer (10) of claim 1 wherein the heat exchanger is a cooling coil.

5. The freezer (10) of claim 1 wherein the liquid cryogen refrigerant is liquid nitrogen.

6. The freezer (10) of claim 1 wherein the insulation space (18) is a vacuum insulation space (18).

7. The freezer (10) of claim 1 further comprising an access opening formed through the inner vessel (12) and the outer jacket (16) and a lid (20) for removably closing the access opening (22), and optionally further comprising a rotating tray positioned within the storage chamber (14).

8. The freezer (10) of claim 1 further comprising:
f) an exit line in communication with the outlet (52) of the heat exchanger (28) and the purge line (54);
g) an exhaust line (76) having an exhaust vent;
h) an exhaust valve (56) positioned within the exhaust line (76);
i) a feed line (32) in communication with the inlet (32) of the heat exchanger (28) and adapted to communicate with the supply of liquid cryogen;
j) a bypass line (38) in communication with the feed line (32);
k) a bypass valve (42) positioned in the bypass line (38).
l) a feed temperature sensor (44) in communication with the feed line (32);
m) a purge gas temperature sensor (64) in communication with the purge line (54);
n) an exhaust gas temperature sensor (82) in communication with the exit line;
o) a chamber temperature sensor (92) in communication with the storage chamber (14);
p) a controller (34) in communication with the feed, purge gas, exhaust gas and chamber temperature sensors and the bypass, purge and exhaust valves, said controller (34) programmed to:
i. open the bypass valve (42) when a temperature of gas flowing through the feed line (32) is higher than a temperature of the storage chamber (14);
ii. close the bypass valve (42) when the temperature of gas flowing through the feed line (32) is lower than the temperature of the storage chamber;
iii. open the purge valve (46) and close the exhaust valve (56) when a temperature of gas flowing through the purge line (54) is greater than a minimum desired temperature of the storage chamber (14);
iv. close the purge valve (46) and open the exhaust valve (56) when the temperature of gas flowing through the purge line (54) is lower than the minimum desired temperature of the storage chamber (14);
v. close the exhaust valve (56) when a temperature of gas flowing through the exit line is lower than the minimum desired temperature of the storage chamber (14) by a predetermined amount; and
vi. close all valves when a temperature of the storage chamber (14) is less than the minimum desired temperature.

9. The freezer (10) of claim 1 further comprising:
f) an exit line in communication with the outlet (52) of the heat exchanger (28) and the purge line (54);
g) an exhaust line (76) having an exhaust vent;
h) an exhaust valve (56) positioned within the exhaust line (76).

10. The freezer (10) of claim 9 further comprising:
i) a purge gas temperature sensor (64) in communication with the purge line (54);
j) an exhaust gas temperature sensor (82) in communication with the exit line;
k) a chamber temperature sensor (92) in communication with the storage chamber (14);
l) a controller (34) in communication with the purge gas, exhaust gas and chamber temperature sensors (92) and the purge and exhaust valves, said controller (34) programmed to:
i. open the purge valve (46) and close the exhaust valve (56) when a temperature of gas flowing through the purge line (54) is greater than a minimum desired temperature of the storage chamber (14);
ii. close the purge valve (46) and open the exhaust valve (56) when the temperature of gas flowing through the purge line (54) is lower than the minimum desired temperature of the storage chamber (14);
iii. close the exhaust valve (56) when a temperature of gas flowing through the exit line is lower than the minimum desired temperature of the storage chamber (14) by a predetermined amount; and
iv. close all valves when a temperature of the storage chamber (14) is less than the minimum desired temperature.

11. The freezer (10) of claim 8 or 10 wherein the predetermined amount by which the temperature of the gas flowing through the exit line must be lower than the minimum desired temperature of the storage chamber (14) to close the exhaust valve (56) is approximately 10°C to 20°C.

12. The freezer (10) of claim 1 further comprising:
f) a feed line (32) in communication with the inlet (32) of the heat exchanger (28) and adapted to communicate with the supply of liquid cryogen;
g) a bypass line (38) in communication with the feed line (32);
h) a bypass valve (42) positioned in the bypass line (38).

13. The freezer (10) of claim 12 further comprising:
i) a feed temperature sensor (44) in communication with the feed line (32);
j) a controller (34) in communication with the feed temperature sensor (44) and the bypass valve (42), said controller (34) programmed to open the bypass valve (42) when a temperature of gas flowing through the feed line (32) is higher than a temperature of the storage chamber (14) and close the bypass valve (42) when the temperature of gas flowing through the feed line (32) is lower than the temperature of the storage chamber (14).

14. The freezer (10) of claim 1 wherein the freezer comprises a supply of liquid cryogen refrigerant and the supply of said liquid cryogen refrigerant includes a pressurized container (29) containing the liquid cryogen refrigerant.

15. The freezer (10) of claim 1 wherein the freezer (10) comprises a supply of liquid cryogen refrigerant and the supply of said liquid cryogen refrigerant includes a container containing the liquid cryogen and a pump in circuit (33) between the container and the heat exchanger inlet (32).

16. A method for cooling a storage chamber (14) of a freezer (10) with a liquid cryogen refrigerant comprising the steps of:
a) providing a heat exchanger (28) in a top portion of the storage chamber (14);
b) feeding the liquid cryogen refrigerant to the heat exchanger (28);
c) vaporizing the liquid cryogen refrigerant in the heat exchanger (28) using heat from the storage chamber (14) so that the storage chamber (14) is cooled and a cryogen refrigerant vapor is produced;
d) purging the cryogen refrigerant vapor from the heat exchanger (28);
e) directing the purged cryogen refrigerant vapor to an exterior of the heat exchanger to reduce ice formation on the heat exchanger (28).

17. The method of claim 16 further comprising the steps of:
f) detecting a temperature of the cryogen refrigerant vapor;
g) exhausting the cryogen refrigerant vapor outside of the freezer (10) if the temperature of the cryogen refrigerant vapor is less than a desired minimum temperature of the storage chamber (14).

## Patentansprüche

1. Gefrierschrank (10) für die Verwendung von flüssigem Kryogen als Kühlmittel, umfassend:
a) ein inneres Gefäß (12), das eine Speicherkammer (14) definiert;
b) einen äußeren Mantel (16), der im Allgemeinen das innere Gefäß (12) umgibt, so dass ein Isolationsraum (18) dazwischen definiert ist;
c) einen Wärmetauscher (28), der in der Speicherkammer (14) positioniert ist, wobei der Wärmetauscher einen Auslass (52) und einen Einlass (32) aufweist, ausgelegt, um mit einer Versorgung des flüssigen Kryogenkühlmittels zu kommunizieren, so dass das flüssige Kryogenkühlmittel durch den Wärmetauscher strömen kann, um die Speicherkammer (14) zu kühlen, während es verdampft wird;
d) eine Spülleitung (54) in Kommunikation mit dem Auslass (52) des Wärmetauschers, wobei die Spülleitung (54) einen Spülauslass (62) umfasst, der benachbart zu einer Außenseite des Wärmetauschers positioniert ist; und
e) ein Spülventil (46), das in der Spülleitung (54) positioniert ist, so dass das verdampfte flüssige Kryogen aus dem Wärmetauscher selektiv zur Außenseite des Wärmetauschers geleitet werden kann, um die Eisbildung auf dem Wärmetauscher zu reduzieren.

2. Gefrierschrank (10) nach Anspruch 1, wobei der Wärmetauscher (28) in einem oberen Abschnitt der Speicherkammer (14) positioniert ist.

3. Gefrierschrank (10) nach Anspruch 1 oder 2, wobei der Spülauslass (62) über dem Wärmetauscher (28) positioniert ist.

4. Gefrierschrank (10) nach Anspruch 1, wobei der Wärmetauscher eine Kühlspule ist.

5. Gefrierschrank (10) nach Anspruch 1, wobei das flüssige Kryogenkühlmittel flüssiger Stickstoff ist.

6. Gefrierschrank (10) nach Anspruch 1, wobei der Isolationsraum (18) ein Vakuumisolationsraum (18) ist.

7. Gefrierschrank (10) nach Anspruch 1, weiter umfassend eine Zugangsöffnung, die durch das innere Gefäß (12) und den äußeren Mantel (16) gebildet ist, und einen Deckel (20) zum entfernbaren Verschließen der Zugangsöffnung (22), und optional weiter umfassend ein sich drehendes Tablett, das innerhalb der Speicherkammer (14) positioniert ist.

8. Gefrierschrank (10) nach Anspruch 1, weiter umfassend
f) eine Ausgangsleitung in Kommunikation mit dem Auslass (52) des Wärmetauschers (28) und der Spülleitung (54);
g) eine Abgasleitung (76) mit einer Abgasentlüftung;
h) ein Abgasventil (56), das innerhalb der Abgasleitung (76) positioniert ist;
i) eine Zufuhrleitung (32) in Kommunikation mit dem Einlass (32) des Wärmetauschers (28) und ausgelegt, um mit der Versorgung von flüssigem Kryogen zu kommunizieren;
j) eine Bypassleitung (38) in Kommunikation mit der Zufuhrleitung (32);
k) ein Bypassventil (42), das in der Bypassleitung (38) positioniert ist.
l) einen Zufuhrtemperatursensor (44) in Kommunikation mit der Zufuhrleitung (32);
m) einen Spülgastemperatursensor (64) in Kommunikation mit der Spülleitung (54);
n) einen Abgastemperatursensor (82) in Kommunikation mit der Ausgangsleitung;
o) einen Kammertemperatursensor (92) in Kommunikation mit der Speicherkammer (14);
p) eine Steuereinheit (34) in Kommunikation mit dem Zufuhr-, Spülgas-, Abgas- und Kammertemperatursensor und dem Bypass-, Spül- und Abgasventil, wobei die Steuereinheit (34) programmiert ist, um:
i. das Bypassventil (42) zu öffnen, wenn eine Temperatur des Gases, das durch die Zufuhrleitung strömt (32), höher als eine Temperatur der Speicherkammer (14) ist;
ii. das Bypassventil (42) zu schließen, wenn die Temperatur des Gases, das durch die Zufuhrleitung strömt (32), niedriger als eine Temperatur der Speicherkammer ist;
iii. das Spülventil (46) zu öffnen und das Abgasventil (56) zu schließen, wenn eine Temperatur des Gases, das durch die Spülleitung (54) strömt, höher als eine minimale gewünschte Temperatur der Speicherkammer (14) ist;
iv. das Spülventil (46) zu schließen und das Abgasventil (56) zu öffnen, wenn die Temperatur des Gases, das durch die Spülleitung (54) strömt, niedriger als eine minimale gewünschte Temperatur der Speicherkammer (14) ist;
v. das Abgasventil (56) zu schließen, wenn eine Temperatur des Gases, das durch die Ausgangsleitung strömt, um eine vorbestimmte Größe niedriger als eine minimale gewünschte Temperatur der Speicherkammer (14) ist; und
vi. alle Ventile zu schließen, wenn eine Temperatur der Speicherkammer (14) niedriger als die minimale gewünschte Temperatur ist.

9. Gefrierschrank (10) nach Anspruch 1, weiter umfassend
f) eine Ausgangsleitung in Kommunikation mit dem Auslass (52) des Wärmetauschers (28) und der Spülleitung (54);
g) eine Abgasleitung (76) mit einer Abgasentlüftung;
h) ein Abgasventil (56), das innerhalb der Abgasleitung (76) positioniert ist.

10. Gefrierschrank (10) nach Anspruch 9, weiter umfassend
i) einen Spülgastemperatursensor (64) in Kommunikation mit der Spülleitung (54);
j) einen Abgastemperatursensor (82) in Kommunikation mit der Ausgangsleitung;
k) einen Kammertemperatursensor (92) in Kommunikation mit der Speicherkammer (14);
l) eine Steuereinheit (34) in Kommunikation mit dem Spülgas-, Abgas- und Kammertemperatursensor (92) und dem Spül- und Abgasventil, wobei die Steuereinheit (34) programmiert ist, um:
i. das Spülventil (46) zu öffnen und das Abgasventil (56) zu schließen, wenn eine Temperatur des Gases, das durch die Spülleitung (54) strömt, höher als eine minimale gewünschte Temperatur der Speicherkammer (14) ist;
ii. das Spülventil (46) zu schließen und das Abgasventil (56) zu öffnen, wenn die Temperatur des Gases, das durch die Spülleitung (54) strömt, niedriger als eine minimale gewünschte Temperatur der Speicherkammer (14) ist;
iii. das Abgasventil (56) zu schließen, wenn eine Temperatur des Gases, das durch die Ausgangsleitung strömt, um eine vorbestimmte Größe niedriger als eine minimale gewünschte Temperatur der Speicherkammer (14) ist; und
iv. alle Ventile zu schließen, wenn eine Temperatur der Speicherkammer (14) niedriger als die minimale gewünschte Temperatur ist.

11. Gefrierschrank (10) nach Anspruch 8 oder 10, wobei die vorbestimmte Größe, um die die Temperatur des Gases, das durch die Ausgangsleitung strömt, niedriger als die minimale gewünschte Temperatur der Speicherkammer (14) sein muss, um das Abgasventil (56) zu schließen, ungefähr 10 °C bis 20 °C beträgt.

12. Gefrierschrank (10) nach Anspruch 1, weiter umfassend
f) eine Zufuhrleitung (32) in Kommunikation mit dem Einlass (32) des Wärmetauschers (28) und ausgelegt, um mit der Versorgung von flüssigem Kryogen zu kommunizieren;
g) eine Bypassleitung (38) in Kommunikation mit der Zufuhrleitung (32);
k) ein Bypassventil (42), das in der Bypassleitung (38) positioniert ist.

13. Gefrierschrank (10) nach Anspruch 12, weiter umfassend
i) einen Zufuhrtemperatursensor (44) in Kommunikation mit der Zufuhrleitung (32);
j) eine Steureinheit (34) in Kommunikation mit dem Zufuhrtemperatursensor (44) und dem Bypassventil (42), wobei die Steuereinheit (34) programmiert ist, um das Bypassventil zu öffnen (42), wenn eine Temperatur des Gases, das durch die Zufuhrleitung (32) strömt, höher als eine Temperatur der Speicherkammer (14) ist und das Bypassventil (42) zu schließen, wenn die Temperatur des Gases, das durch die Zufuhrleitung strömt (32), niedriger als eine Temperatur der Speicherkammer (14) ist.

14. Gefrierschrank (10) nach Anspruch 1, wobei der Gefrierschrankt eine Versorgung von flüssigem Kryogenkühlmittel umfasst und die Versorgung von flüssigem Kryogenkühlmittel einen unter Druck gesetzten Behälter (29) umfasst, der das flüssige Kryogenkühlmittel enthält.

15. Gefrierschrank (10) nach Anspruch 1, wobei der Gefrierschrank (10) eine Versorgung von flüssigem Kryogenkühlmittel umfasst und die Versorgung des flüssigen Kryogenkühlmittels einen Behälter, der das flüssige Kryogen enthält, und eine Pumpe im Kreislauf (33) zwischen dem Behälter und dem Wärmetauschereinlass (32) umfasst.

16. Verfahren zur Kühlung einer Speicherkammer (14) eines Gefrierschranks (10) mit einem flüssigen Kryogenkühlmittel, umfassend die folgenden Schritte:
a) Bereitstellen eines Wärmetauschers (28) in einem oberen Abschnitt der Speicherkammer (14);
b) Zuführen des flüssigen Kryogenkühlmittels in den Wärmetauscher (28);
c) Verdampfen des flüssigen Kryogenkühlmittels im Wärmetauscher (28) unter Verwendung von Wärme aus der Speicherkammer (14), so dass die Speicherkammer (14) gekühlt und ein Kryogenkühlmitteldampf erzeugt wird.
d) Spülen des Kryogenkühlmitteldampfs aus dem Wärmetauscher (28);
e) Leiten des gespülten Kryogenkühlmitteldampfs an die Außenseite des Wärmetauschers, um die Eisbildung auf dem Wärmetauscher (28) zu reduzieren.

17. Verfahren nach Anspruch 16, weiter umfassend die folgenden Schritte:
f) Erfassen einer Temperatur des Kryogenkühlmitteldampfs;
g) Ableiten des Kryogenkühlmitteldampfs an die Außenseite des Gefrierschranks (10), wenn die Temperatur des Kryogenkühlmitteldampfs kleiner als eine gewünschte minimale Temperatur der Speicherkammer (14) ist.

## Revendications

1. Congélateur (10) permettant d'utiliser un cryogène liquide en tant que réfrigérant, comprenant :
a) un récipient intérieur (12) définissant une chambre de stockage (14) ;
b) une enveloppe extérieure (16) entourant essentiellement le récipient intérieur (12) de telle manière qu'un espace d'isolation (18) est défini entre ceux-ci ;
c) un échangeur de chaleur (28) positionné dans la chambre de stockage (14), ledit échangeur de chaleur présentant une sortie (52) et une entrée (32) conçues pour communiquer avec un approvisionnement du réfrigérant cryogène liquide de telle manière que le réfrigérant cryogène liquide peut circuler à travers l'échangeur de chaleur pour refroidir la chambre de stockage (14) en étant vaporisé ;
d) une conduite de vidange (54) en communication avec la sortie (52) de l'échangeur de chaleur, ladite conduite de vidange (54) comprenant une sortie de vidange (62) positionnée adjacente à un extérieur de l'échangeur de chaleur ; et
e) une vanne de vidange (46) positionnée au sein de la conduite de vidange (54) de telle manière que le cryogène liquide vaporisé en provenance de l'échangeur de chaleur peut être dirigé de manière sélective vers l'extérieur de l'échangeur de chaleur afin de réduire une formation de glace sur l'échangeur de chaleur.

2. Congélateur (10) selon la revendication 1, dans lequel l'échangeur de chaleur (28) est positionné au sein d'une partie supérieure de la chambre de stockage (14).

3. Congélateur (10) selon la revendication 1 ou 2, dans lequel la sortie de vidange (62) est positionnée au-dessus de l'échangeur de chaleur (28).

4. Congélateur (10) selon la revendication 1, dans lequel l'échangeur de chaleur est un serpentin de refroidissement.

5. Congélateur (10) selon la revendication 1, dans lequel le réfrigérant cryogène liquide est de l'azote liquide.

6. Congélateur (10) selon la revendication 1, dans lequel l'espace d'isolation (18) est un espace d'isolation sous vide (18).

7. Congélateur (10) selon la revendication 1, comprenant en outre une ouverture d'accès formée à travers le récipient intérieur (12) et l'enveloppe extérieure (16) et un couvercle (20) permettant de fermer de manière amovible l'ouverture d'accès (22), et comprenant en outre éventuellement un plateau rotatif positionné au sein de la chambre de stockage (14).

8. Congélateur (10) selon la revendication 1, comprenant en outre :
f) une conduite de sortie en communication avec la sortie (52) de l'échangeur de chaleur (28) et la conduite de vidange (54) ;
g) une conduite d'évacuation (76) présentant une mise à l'air d'évacuation ;
h) une vanne d'évacuation (56) positionnée au sein de la conduite d'évacuation (76) ;
i) une conduite d'alimentation (32) en communication avec l'entrée (32) de l'échangeur de chaleur (28) et conçue pour communiquer avec l'approvisionnement en cryogène liquide ;
j) une conduite de dérivation (38) en communication avec la conduite d'alimentation (32) ;
k) une vanne de dérivation (42) positionnée dans la conduite de dérivation (38) ;
1) un capteur de température d'alimentation (44) en communication avec la conduite d'alimentation (32) ;
m) un capteur de température de gaz de vidange (64) en communication avec la conduite de vidange (54) ;
n) un capteur de température de gaz d'évacuation (82) en communication avec la conduite de sortie ;
o) un capteur de température de chambre (92) en communication avec la chambre de stockage (14) ;
p) un dispositif de commande (34) en communication avec les capteurs d'alimentation, de gaz de vidange, de gaz d'évacuation et de température de chambre et avec les vannes de dérivation, de vidange et d'évacuation, ledit dispositif de commande (34) étant programmé pour :
i. ouvrir la vanne de dérivation (42) lorsqu'une température de gaz circulant à travers la conduite d'alimentation (32) est supérieure à une température de la chambre de stockage (14) ;
ii. fermer la vanne de dérivation (42) lorsque la température du gaz circulant à travers la conduite d'alimentation (32) est inférieure à la température de la chambre de stockage ;
iii. ouvrir la vanne de vidange (46) et fermer la vanne d'évacuation (56) lorsqu'une température du gaz circulant à travers la conduite de vidange (54) est supérieure à une température minimum souhaitée de la chambre de stockage (14) ;
iv. fermer la vanne de vidange (46) et ouvrir la vanne d'évacuation (56) lorsque la température du gaz circulant à travers la conduite de vidange (54) est inférieure à la température minimum souhaitée de la chambre de stockage (14) ;
v. fermer la vanne d'évacuation (56) lorsqu'une température du gaz circulant à travers la conduite de sortie est inférieure à la température minimum souhaitée de la chambre de stockage (14) à concurrence d'un montant prédéterminé ; et
vi. fermer toutes les vannes lorsqu'une température de la chambre de stockage (14) est inférieure à la température minimum souhaitée.

9. Congélateur (10) selon la revendication 1, comprenant en outre :
f) une conduite de sortie en communication avec la sortie (52) de l'échangeur de chaleur (28) et la conduite de vidange (54) ;
g) une conduite d'évacuation (76) présentant une mise à l'air d'évacuation ;
h) une vanne d'évacuation (56) positionnée au sein de la conduite d'évacuation (76).

10. Congélateur (10) selon la revendication 9, comprenant en outre :
i) un capteur de température de gaz de vidange (64) en communication avec la conduite de vidange (54) ;
j) un capteur de température de gaz d'évacuation (82) en communication avec la conduite de sortie ;
k) un capteur de température de chambre (92) en communication avec la chambre de stockage (14) ;
1) un dispositif de commande (34) en communication avec les capteurs (92) de gaz de vidange, de gaz d'évacuation et de température de chambre et avec les vannes de vidange et d'évacuation, ledit dispositif de commande (34) étant programmé pour :
i. ouvrir la vanne de vidange (46) et fermer la vanne d'évacuation (56) lorsqu'une température de gaz circulant à travers la conduite de vidange (54) est supérieure à une température minimum souhaitée de la chambre de stockage (14) ;
ii. fermer la vanne de vidange (46) et ouvrir la vanne d'évacuation (56) lorsque la température du gaz circulant à travers la conduite de vidange (54) est inférieure à la température minimum souhaitée de la chambre de stockage (14) ;
iii. fermer la vanne d'évacuation (56) lorsqu'une température du gaz circulant à travers la conduite de sotie est inférieure à la température minimum souhaitée de la chambre de stockage (14) à concurrence d'un montant prédéterminé ; et
iv. fermer toutes les vannes lorsqu'une température de la chambre de stockage (14) est inférieure à la température minimum souhaitée.

11. Congélateur (10) selon la revendication 8 ou 10, dans lequel le montant prédéterminé à concurrence duquel la température du gaz circulant à travers la conduite de sortie doit être inférieure à la température minimum souhaitée de la chambre de stockage (14) pour fermer la vanne d'évacuation (56) est compris approximativement entre 10°C et 20°C.

12. Congélateur (10) selon la revendication 1, comprenant en outre :
f) une conduite d'alimentation (32) en communication avec l'entrée (32) de l'échangeur de chaleur (28) et conçue pour communiquer avec l'approvisionnement en cryogène liquide ;
g) une conduite de dérivation (38) en communication avec la conduite d'alimentation (32) ;
h) une vanne de dérivation (42) positionnée dans la conduite de dérivation (38).

13. Congélateur (10) selon la revendication 12, comprenant en outre :
i) un capteur de température d'alimentation (44) en communication avec la conduite d'alimentation (32) ;
j) un dispositif de commande (34) en communication avec le capteur de température d'alimentation (44) et la vanne de dérivation (42), ledit dispositif de commande (34) étant programmé pour ouvrir la vanne de dérivation (42) lorsqu'une température de gaz circulant à travers la conduite d'alimentation (32) est supérieure à une température de la chambre de stockage (14) et fermer la vanne de dérivation (42) lorsque la température du gaz circulant à travers la conduite d'alimentation (32) est inférieure à la température de la chambre de stockage (14).

14. Congélateur (10) selon la revendication 1, dans lequel le congélateur comprend un approvisionnement de réfrigérant cryogène liquide et l'approvisionnement dudit réfrigérant cryogène liquide inclut un conteneur sous pression (29) contenant le réfrigérant cryogène liquide.

15. Congélateur (10) selon la revendication 1, dans lequel le congélateur (10) comprend un approvisionnement de réfrigérant cryogène liquide et l'approvisionnement dudit réfrigérant cryogène liquide inclut un conteneur contenant le cryogène liquide et une pompe en circuit (33) entre le conteneur et l'entrée d'échangeur de chaleur (32).

16. Procédé permettant de refroidir une chambre de stockage (14) d'un congélateur (10) avec un réfrigérant cryogène liquide, comprenant les étapes consistant à :
a) fournir un échangeur de chaleur (28) dans une partie supérieure de la chambre de stockage (14) ;
b) alimenter le réfrigérant cryogène liquide vers l'échangeur de chaleur (28) ;
c) vaporiser le réfrigérant cryogène liquide dans l'échangeur de chaleur (28) en utilisant de la chaleur provenant de la chambre de stockage (14) de telle manière que la chambre de stockage (14) est refroidie et une vapeur de réfrigérant cryogène est produite ;
d) vidanger la vapeur de réfrigérant cryogène à partir de l'échangeur de chaleur (28) ;
e) diriger la vapeur de réfrigérant cryogène vidangée vers un extérieur de l'échangeur de chaleur afin de réduire une formation de glace sur l'échangeur de chaleur (28).

17. Procédé selon la revendication 16, comprenant en outre les étapes consistant à :
f) détecter une température de la vapeur de réfrigérant cryogène ;
g) évacuer la vapeur de réfrigérant cryogène vers l'extérieur du congélateur (10) si la température de la vapeur de réfrigérant cryogène est inférieure à une température minimum souhaitée de la chambre de stockage (14).
